# EUROPÄISCHE PATENTSCHRIFT

(11) **EP 1 163 839 B1**
(45) Veröffentlichungstag und Bekanntmachung des Hinweises auf die Patenterteilung: **09.05.2007**
(21) Anmeldenummer: 01113499.6
(22) Anmeldetag: 02.06.2001
(51) Int. Cl.: A01F 15/10, A01D 89/00

(54) **Abstreifer und Gutförderer**
Scraper and crop feeding device
Racleur et dispositif de transport de récolte

(30) Priorität: 15.06.2000 US 594250
(43) Veröffentlichungstag der Anmeldung: 19.12.2001
(73) Patentinhaber: DEERE & COMPANY, Moline, Illinois 61265-8098 (US)
(72) Erfinder: Engel, Manfred, 66484 Grossteinhausen (DE)
(74) Vertreter: Magin, Ludwig Bernhard

(56) Entgegenhaltungen:
- EP-A- 0 255 074
- EP-A- 0 584 473
- DE-U- 8 500 053
- GB-A- 1 121 707
- GB-A- 1 282 574

## Beschreibung

Die Erfindung betrifft einen Abstreifer eines Gutförderers mit flachen Seitenwänden zwischen denen sich eine daran angeschlossene Wand erstreckt, und einen Gutförderer, wie aus dem Dokument GB 1 282 574 bekannt.

Die EP-A1-0 803 184 offenbart eine Rundballenpresse mit einem Gutförderer, der zwischen einer Pick-Up und einem Einlaß in eine Ballenbildungskammer einen Über-Kopf-Förderer mit starren Zinken enthält. Zwischen den Zinken sind Zungen von Abstreifblechen vorgesehen, auf denen gefördertes Gut zu dem Einlaß gleitet.

Das der Erfindung zugrunde liegende Problem wird in der schlechten Fördereigenschaft und dem Verschleißverhalten derartiger glatter Bleche gesehen.

Dieses Problem wird erfindungsgemäß durch die Lehre des Patentanspruchs 1 gelöst, wobei in den weiteren Patentansprüchen die Lösung in vorteilhafter Weise weiterentwickelnde Merkmale aufgeführt sind.

Auf diese Weise wird der Abstreifer selbst bei starkem Gutanfall durch die Schultern gegen Verbiegen geschützt, und zwischen den Schultern ergibt sich ein Förderkanal, der das Fördergut von den gleitenden Fingern abhält. Die Bogenform der Schulter vermeidet zudem Eckbereiche, in denen sich das Fördergut festhängen und zu Staus führen kann. Die Schultern mit den Seitenwänden und die dazwischenliegende Wand sind zwar vorzugsweise einstückig ausgebildet, können aber auch zusammengesetzt werden.

Eine hervorragende Kanalisierung des Förderguts ergibt sich durch entsprechend hohe Schultern, wobei das Zweifache der Dicke der Seitenwände als sehr vorteilhaft angesehen wird. Außerdem ergibt sich ein direkter Zusammenhang zwischen der Stärke der Seitenwände bzw. der Höhe der Schultern und der durch sie erreichbaren Lebensdauer.

Die von den Schultern hervorgebrachte Führungseigenschaft der Abstreifer wird noch dadurch erhöht, daß der Bereich zwischen ihnen mittels einer konkaven Ausgestaltung der Wand abgesenkt wird.

Insbesondere bei grobem Erntegut, wie z. B. Luzerne, ist eine Vertiefung derart, daß die maximale Tiefe der Konkavität der Wand gemessen zu der Anschlußstelle der Wand an den Schultern größer ist als der Abstand zwischen dieser Anschlußstelle und dem radial außenliegenden Ende der Schultern sehr geeignet, das Fördergut zu führen.

Abstreifer aus einem hoch molekulargewichtigen Polyethylen sind sehr fest, stabil und verschleißarm, woraus sich eine lange Lebensdauer ergibt. Die Ausbildung aus Kunststoff im Gegensatz zu der Alternative Metall, z. B. Aluminium, hat den zusätzlichen Vorteil des geringen Gewichts und der leichten Herstellbarkeit als Massenteil.

Wenn ein Abstreifer auch nur eine von Fördergut beaufschlagbare Fläche aufweist, so birgt die Verwendung zweier identischer Hälften den Vorteil in sich, daß mittels der zweiten Hälfte die erforderliche Stabilität erreichbar ist, ein leichter zu befestigender Zusammenbau vorliegt und bei Verschleiß an einer Hälfe, die beiden Hälften ausgetauscht werden können. Die Identität erbringt wieder höhere Stückzahlen und somit geringere Stückkosten.

Wenn der Abstreifer von der Seite gesehen oval aussieht, liegen steil ansteigende bzw. abfallende Förderflächen nicht vor, so daß die Bewegung des Förderguts nicht unnötig gebremst wird. Die von den Fingern auf der Welle des Förderers getragene Matte wird zudem von den Fingern auf den Abstreifer gehoben.

Eine Ausnehmung zur Aufnahme der Welle dient zum einen der engen Umschließung der Welle und damit der unmittelbaren Überleitung des Förderguts auf die Abstreifer. Der Formschluß zwischen der Welle und dem Abstreifer dient zudem dessen örtlicher Festlegung. Die Ausnehmung kann sogar mit einem Gleit- oder Rollenlager versehen werden, wenn dies aufgrund der anfallenden Kräfte erforderlich sein sollte. Wenn der Abstreifer aus identischen Hälften besteht, verläuft die Trennungsebene möglichst mittig durch die Ausnehmung, so daß die Hälften leicht auf die Welle ausgesetzt werden können.

Eine sichere und einfache Verbindung der beiden Hälften ergibt sich dadurch, daß die Hälften einenends mittels eines lösbaren Befestigungsmittels und anderenends formschlüssig miteinander verbindbar sind. Das Befestigungsmittel kann eine Schraube, ein Niet, ein Schnappbolzen oder dergleichen sein. Der Formschluß kann durch ein Scharnier, ineinandergreifende Klauen oder dergleichen gebildet werden. Vorzugsweise wird zunächst ein Endbereich zusammengefügt und dann beide Hälften an dem anderen Endbereich befestigt.

Da Erntegüter in der Landwirtschaft, z. B. Stroh, Gras, Luzerne, etc. aufgrund ihres z. T. störrigen Verhaltens wegen der Stängelstärke, einer guten Führung bedürfen, ist die Anwendung bei einem Gutförderer, insbesondere dem einer Erntebergungsmaschine, mit einem eine Welle und darauf befestigten Fingern aufweisenden Förderer, wobei zwischen den Fingern die erfindungsgemäßen Abstreifer angebracht sind, sehr wirksam.

In der Zeichnung ist ein nachfolgend näher beschriebenes Ausführungsbeispiel der Erfindung dargestellt. Es zeigt:
- Fig. 1: ein Gutförderer in Vorderansicht,
- Fig. 2: der Gutförderer aus Figur 1 in Seitenansicht,
- Fig. 3: eine obere Hälfte eines in dem Gutförderer enthaltenen Abstreifers in einer perspektivischen Ansicht,
- Fig. 4: die Hälfte des Abstreifers in Seitenansicht,
- Fig. 5: die Hälfte des Abstreifers in Draufsicht,
- Fig. 6: die Hälfte des Abstreifers in Vorderansicht, und
- Fig. 7: einen Schnitt durch den Abstreifer entlang der Linie 7-7 in Figur 4 und in der Blickrichtung der dazugehörigen Pfeile.

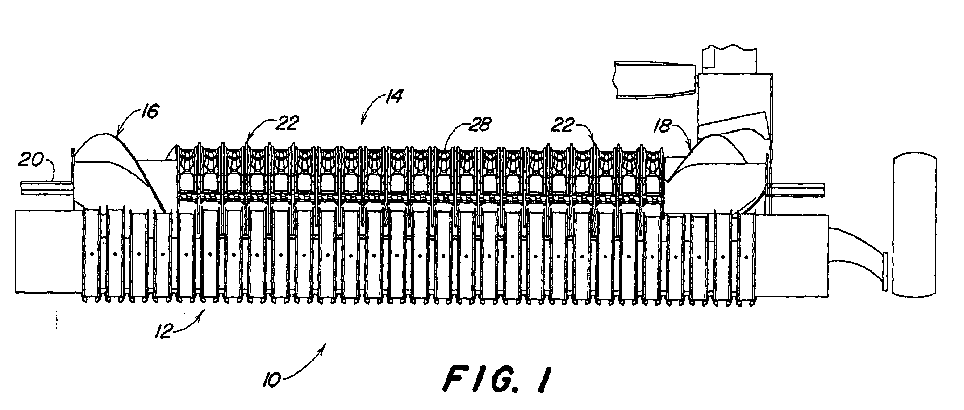

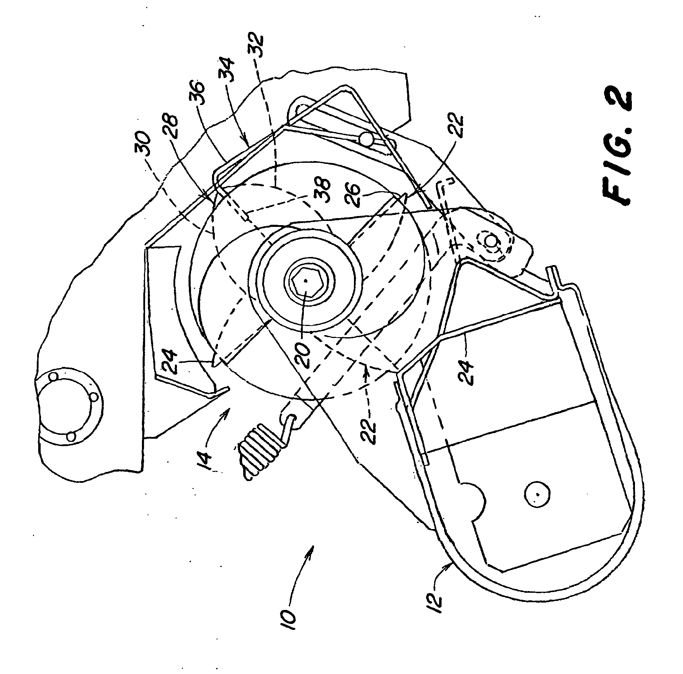

In Figur 1 ist ein Gutförderer 10 gezeigt, der z. B. als Teil einer Presse zum Herstellen großer zylindrischer Ballen benutzt wird, und wirkt, um in einem Schwad abgelegtes Erntegut aufzunehmen und an eine Ballenbildungskammer der Presse weiterzugeben. Der Gutförderer 10 enthält einen Aufnehmer 12, eine sog. Pick-up, von herkömmlicher Bauweise mit einer Vielzahl nicht gezeigter Federzinken, die um eine quer verlaufende Achse rotieren, um ein Schwad von Erntegut vom Boden anzuheben und an einen rotierenden Förderer 14 weiterzugeben. Der rotierende Förderer 14 ist mit einer rechten und einer linken Schnecke 16 und 18 versehen, die das Erntegut zur Mitte fördern, was den Gutstrom z. B. auf die Breite der Ballenbildungskammer verschmälert. In Figur 2 ist zu sehen, daß eine Vielzahl starrer Zinken oder Fingereinheiten 22 zwischen den Schnecken 16 und 18 auf eine Welle 20 montiert ist. Jede der Fingereinheiten 22 ist plattenförmig ausgebildet, um ein Paar sich diametral gegenüberliegender Finger 24 und 26 mit bogenförmig verlaufenden voreilenden Kanten zu bilden. Eine Vielzahl ovalförmiger Abstreifer 28 ist mit seitlichem Abstand zueinander angebracht, um so jeweilige Schlitze für den Durchgang der Finger 24 und 26 der jeweiligen Fingereinheit 22 während des Umlaufs der Welle 20 zu bilden.

Die Abstreifer 28 sind jeweils aus oberen und unteren Hälften 30 und 32 gebildet. Vorzugsweise sind die Hälften 30, 32 identisch und aus Polyethylän mit ultra hohem Molekulargewicht (UHMW) gebildet. Eine Tragwand 34 zum Tragen der Abstreifer 28 erstreckt sich quer hinter dem rotierenden Förderer 14 und endet in einer Vielzahl einen Querabstand zueinander aufweisender Zungen 36 mit sich nach unten und vorne erstreckenden Befestigungsbereichen 38, die ungefähr auf dem halben Weg zwischen der Zwei- und der Drei-Uhr-Stellung um die Welle 20 des rotierenden Förderers 14 angeordnet sind. Jeder Befestigungsbereich 38 wird in einem Schlitz aufgenommen, der in der Rückseite eines jeweiligen Abstreifers 28 von der unteren und der oberen Hälfte 30 und 32 gebildet wird.

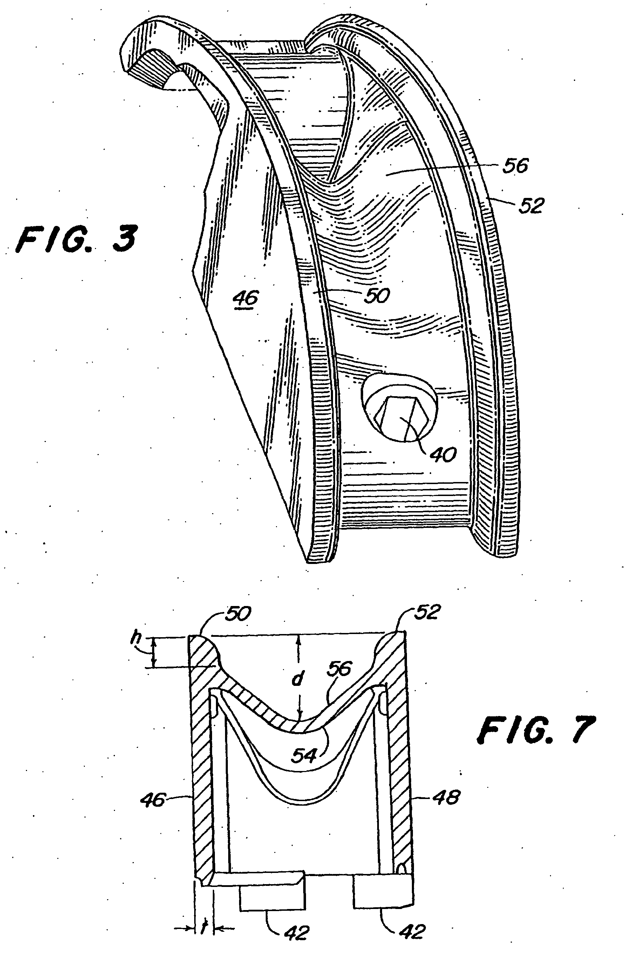

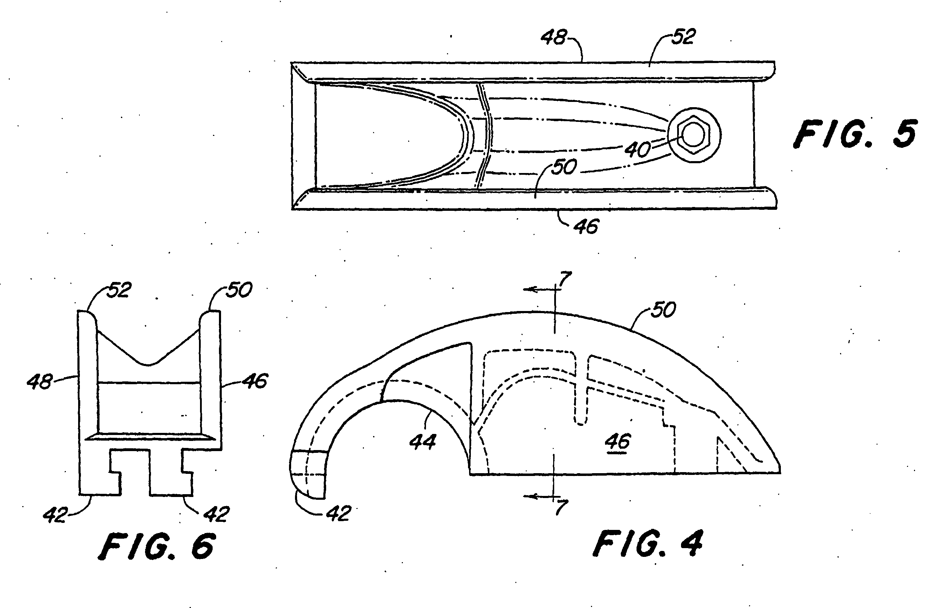

In den Figuren 3 bis 7 ist die obere identische Hälfte 30 gezeigt. Ausgehend davon wird verständlich, daß die Hälften 30 und 32 jeweils mit einem Montageloch 40 versehen sind, wobei diese Montagelöcher 40 aneinander ausgerichtet sind und eine nicht gezeigte Befestigungsschraube aufnehmen, die die Hälften 30, 32 zusammen und auf den Befestigungsbereich 38 klemmt. Vordere Enden der Hälften 30, 32 enthalten jeweils ein Paar L-förmiger Vorsprünge 42, die ineinander eingreifen, um ein Gelenk zu bilden, um das die Hälften 30, 32 in Bezug aufeinander schwenken können. Die vorderen Bereiche der Hälften 30, 32 sind jeweils mit halbkreisförmigen Ausnehmungen 44 versehen, die zusammenwirken, um eine zylindrische Öffnung zu bilden, durch die sich die Welle 40 erstreckt, wenn die Abstreifer 28 auf die Befestigungsbereiche 38 montiert sind. Der Bereich der Hälften 30, 32, der sich rückwärtig der Ausnehmung 44 befindet, enthält gegenüberliegende, ebene und parallele Seitenwänden 46, 48 mit verdickten Randbereichen, die von der Seite gesehen, entsprechende Schultern 50, 52 bilden, die auf einem festen Radius kreisförmig ausgebildet sind. Wie dies am besten aus Figur 7 hervorgeht, sind die Schultern 50, 52 ungefähr 1,33 bis 1,6 mal so dick wie der Rest der Seitenwände 46, 48 und weisen eine radiale Höhe h von ungefähr zweimal deren Dicke t auf. Eine konkave, zwischenliegende Wand 54 verbindet die radial inneren Abschnitte oder den Boden jeder Schulter 50, 52, die sich ausgehend von dem Boden radial nach innen erstreckt, und zwar um eine Entfernung, die ungefähr der radialen Höhe der Schultern 50 und 52 entspricht, um so einen Gutleitkanal 56 zu bilden, der wirkt, um das Erntegut in einer Längsrichtung auszurichten, wenn es von dem rotierenden Förderer 14 nach hinten befördert wird.

In einer Ausführungsform der Erfindung beträgt der Radius der Schultern 120 mm, während die Dicke der Seitenwände 46 und 48 konstant 4,6 mm ausmacht, ausgenommen an den Schultern 50, 52, die ungefähr 8 mm dick sind und eine radiale Höhe von 9 mm über der Verbindungsstelle mit der Wand 54 hinaus, aufweisen. Die Konkavität eines wesentlichen Bereiches der Wand 54 ist derart, daß der mittlere Bereich in der Querrichtung der Wand 54 radial um einen Abstand von 15 mm einwärts von dem äußeren Radius der Schultern 50 und 52 gelegen ist. Zusammen mit dem UHMW Polyethylän ergeben diese Abmessungen einen Abstreifer 28 mit einer Lebensdauer von ungefähr dem Zehnfachen dessen, was mit bekannten Abstreifern erreicht wird und bei denen die Wand 54 dazu dient, das Erntegut in der Längsrichtung auszurichten. Zudem kann der Abstreifer 28 umgedreht werden, wenn die obere Hälfte 30 für einen zufriedenstellenden Betrieb zu zerschlissen ist, weil die Hälften 30, 32 identisch sind.

## Patentansprüche

1. Abstreifer (28) eines Gutförderers (10) mit flachen Seitenwänden (46, 48), zwischen denen sich eine daran angeschlossene Wand (54) erstreckt und die jeweils in einer bogenförmigen Schulter (50, 52) auslaufen, **dadurch gekennzeichnet, daß** die Dicke und die Höhe der Schulter (50, 52) größer ist als die Dicke der Seitenwand (46, 48).

2. Abstreifer nach Anspruch 1, **dadurch gekennzeichnet, daß** die Höhe der Schulter (50, 52) im wesentlichen das doppelte der Dicke der Seitenwand (46, 48) beträgt.

3. Abstreifer nach Anspruch 1 oder 2, **dadurch gekennzeichnet, daß** die Wand (54) konkav ausgebildet ist, und zwar vorzugsweise auf dem größten Teil ihrer Breite.

4. Abstreifer nach Anspruch 3, **dadurch gekennzeichnet, daß** die maximale Tiefe der Konkavität der Wand (54) gemessen zu der Anschlußstelle der Wand (54) an den Schultern (50, 52) größer ist als der Abstand zwischen dieser Anschlußstelle und dem radial außenliegenden Ende der Schultern (50, 52).

5. Abstreifer nach einem oder mehreren der vorherigen Ansprüche, **dadurch gekennzeichnet, daß** er aus einem hoch molekulargewichtigen Polyethylen besteht.

6. Abstreifer nach einem oder mehreren der vorherigen Ansprüche, **dadurch gekennzeichnet, daß** er aus zwei identischen Hälften (30, 32) gebildet ist.

7. Abstreifer nach einem oder mehreren der vorherigen Ansprüche, **dadurch gekennzeichnet, daß** er in der Seitenansicht eine ovale Form einnimmt.

8. Abstreifer nach einem oder mehreren der vorherigen Ansprüche, **dadurch gekennzeichnet, daß** er eine in wenigstens einer Richtung zentrische Ausnehmung (44) zur Aufnahme einer Welle (20) aufweist, die gegebenenfalls von der Trennungsebene zwischen zwei Hälften (30, 32) geschnitten wird.

9. Abstreifer nach einem oder mehreren der vorherigen Ansprüche, **dadurch gekennzeichnet, daß** die Hälften (30, 32) einenends mittels eines lösbaren Befestigungsmittels und anderenends formschlüssig miteinander verbindbar sind.

10. Gutförderer, insbesondere einer Erntebergungsmaschine, mit einem eine Welle (20) und darauf befestigten Fingern (24, 26) aufweisenden Förderer (14), wobei zwischen den Fingern (24, 26) Abstreifer (28) nach einem oder mehreren der vorherigen Ansprüche angebracht sind.

## Claims

1. A stripper (28) of a crop conveyor (10), with flat sidewalls (46, 48), between which extends a wall (54) attached to them and which each terminate in a curved shoulder (50, 52) **characterized in that** the thickness and height of the shoulder (50, 52) is greater than the thickness of the sidewall (46, 48).

2. A stripper according to claim 1, **characterized in that** the height of the shoulder (50, 52) amounts to substantially twice the thickness of the sidewall (46, 48).

3. A stripper according to claim 1 or 2, **characterized in that** the wall (54) is formed concavely and specifically preferably over the greatest part of its width.

4. A stripper according to claim 3, **characterized in that** the maximum depth of the concavity of the wall (54) measured to the junction point of the wall (54) with the shoulders (50, 52) is greater than the distance between this junction point and the radially outer end of the shoulders (50, 52).

5. A stripper according to one or more of the preceding claims, **characterized in that** it consists of a high molecular weight polyethylene.

6. A stripper according to one or more of the preceding claims, **characterized in that** it is formed from two identical halves (30, 32).

7. A stripper according to one or more of the preceding claims, **characterized in that** it has an oval shape in side view.

8. A stripper according to one or more of the preceding claims, **characterized in that** it has an opening (44) which is central in at least one direction, for reception of a shaft (20), and which is optionally intersected by the plane of separation between two halves (30, 32).

9. A stripper according to one or more of the preceding claims, **characterized in that** the halves (30, 32) can be connected at one end by means of releasable attachment means and at the other end interlock with one another.

10. A crop conveyor, especially a harvesting machine, with a conveyor (14) having a shaft (20) and fingers (24, 26) fixed thereon, wherein strippers (28) according to one or more of the preceding claims are fitted between the fingers (24, 26).

## Revendications

1. Racleur (28) d'un convoyeur de récolte (10), comportant des parois latérales (46, 48) plates, entre lesquelles s'étend une paroi (54) assemblée à celles-ci et lesquelles se terminent chacune par un épaulement (50, 52) courbe, **caractérisé en ce que** l'épaisseur et la hauteur de l'épaulement (50, 52) sont supérieures à l'épaisseur de la paroi latérale (46, 48).

2. Racleur selon la revendication 1, **caractérisé en ce que** la hauteur de l'épaulement (50, 52) est sensiblement égale au double de l'épaisseur de la paroi latérale (46, 48).

3. Racleur selon la revendication 1 ou 2, **caractérisé en ce que** la paroi (54) est concave, à savoir de préférence sur la majeure partie de sa largeur.

4. Racleur selon la revendication 3, **caractérisé en ce que** la profondeur maximale de la concavité de la paroi (54), mesurée par rapport à la zone de raccordement de la paroi (54) au niveau des épaulements (50, 52), est supérieure à la distance entre cette zone de raccordement et l'extrémité radialement extérieure des épaulements (50, 52).

5. Racleur selon une ou plusieurs des revendications précédentes, **caractérisé en ce qu'**il est réalisé en polyéthylène avec un poids moléculaire élevé.

6. Racleur selon une ou plusieurs des revendications précédentes, **caractérisé en ce qu'**il est formé par deux moitiés (30, 32) identiques.

7. Racleur selon une ou plusieurs des revendications précédentes, **caractérisé en ce que**, sur la vue de profil, il a une forme ovale.

8. Racleur selon une ou plusieurs des revendications précédentes, **caractérisé en ce qu'**il comporte un creux (44) centré dans au moins une direction et destiné à recevoir un arbre (20) qui, le cas échéant, est coupé par le plan de séparation entre deux moitiés (30, 32).

9. Racleur selon une ou plusieurs des revendications précédentes, **caractérisé en ce que** les moitiés (30, 32) peuvent être assemblées, sur une extrémité, au moyen d'un élément de fixation amovible et, sur l'autre extrémité, l'une à l'autre par conjugaison de forme.

10. Convoyeur de récolte, en particulier d'une machine de récolte, comportant un convoyeur (14) muni d'un arbre (20) et de doigts (24, 26) fixés sur ce dernier, des racleurs (28) selon une ou plusieurs des revendications précédentes étant disposés entre les doigts (24, 26).
